# EUROPEAN PATENT SPECIFICATION

(11) **EP 0 637 709 B1**
(45) Date of publication and mention of the grant of the patent: **19.03.1997**
(21) Application number: 94500133.7
(22) Date of filing: 21.07.1994
(51) Int. Cl.: F16K 11/078

(54) **Single control mixing valve**
Einhebel-Mischventil
Robinet mélangeur à poignée unique

(30) Priority: 02.08.1993 ES 9302165
(43) Date of publication of application: 08.02.1995
(73) Proprietor: COMPANIA ROCA-RADIADORES, S.A., E-08850 Gava (Barcelona) (ES)
(72) Inventor: Singla Palacin, Jaime, E-08850 Gava (ES)
(74) Representative: Durán Olivella, Alfonso

(56) References cited:
- EP-A- 0 162 342
- CH-A- 651 119
- CH-A- 674 065
- DE-A- 3 142 235
- DE-C- 3 310 080
- US-A- 4 715 406

## Description

The present invention relates to a single control mixing valve which provides appreciable characteristics of novelty and inventive step relative to other types currently known in the field.

### BACKGROUND OF THE INVENTION

Single control mixing valves are being used increasingly in bathrooms and the like due to the many advantages which they provided relative to traditional valves, in particular in terms of their ease of operation, good seal for preventing leaks and the fact that they maintain the hot/cold water mix setting even in the closed position, etc.

Said single control mixing valves consist essentially of two superposed ceramic discs or plates fitted inside a housing or assembled within the body of the tap. One of said plates is fixed whilst the other is moveable and can be actuated according to two types of movement, one of which is rotational and enables the temperature of the of the mixed water to be adjusted, the other being rectilinear and is for adjusting the flow rate of the tap.

The fixed plate includes the two inlets for hot and cold water respectively, said inlets being arranged in the form of a circular curve, and along which the movable plate can be moved such that when it rotates so as to gradually open the hot water inlet it increases the temperature of the mixture, at the same time closing the cold water inlet and vice versa when the temperature of the water coming out of the tap is to be reduced.

Single control mixing values of the type defined in the preamble of claim 1 are already known.

In the known types of valve there is always a region of the movable plate that is wet due to contact with the inlets of the fixed plate but, given the high degree of watertightness between the two superposed plates, the region furthest away from said inlets works by sliding in the dry once the initial film of oil has disappeared due to the repeated sliding operations that take place between the two plates.

### DESCRIPTION OF THE INVENTION

One of the main objectives of the present invention is that the entire surface of the movable plate acts in wet conditions and therefore with a smoother sliding operation. The present invention therefore foresees that the fixed plate has a curved rebate, concentric with the water outlet hole, and that the adjustment cavity of the movable plate has a prolongation by means of which said rebate of the fixed plate fills up with liquid each time the tap is closed, thereby wetting the corresponding region of the movable plate.

The valve that forms the object of the present invention has the further objective of reducing the murmuring noise produced by the passage of water, particularly in the sealing gaskets fitted to the fixed lower cover thereof. Therefore, in a preferred embodiment the present invention foresees a special constitution of the gasket or gaskets fitted to the hot and cold water inlets as well as the mixed water outlet, wherein it is essential that said gaskets have a number of eccentric lips that extend over a substantial part of the periphery of the gasket, at approximately the mid-point of said periphery, forming intermediate chambers to which the water has no access but which are simply filled with air such that, as the inventors have discovered, they provide an effective shock-absorbing effect.

### BRIEF DESCRIPTION OF THE DRAWINGS

In order that the present invention be better understood, the accompanying drawings show by way of non-limiting example one practical embodiment of the improved single control valve for taps according to the present invention.

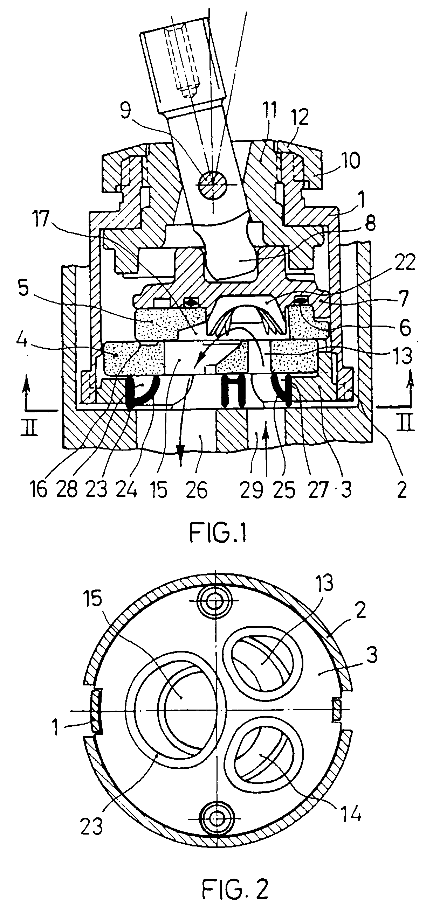

Figure 1 shows a complete section taken along a diametral plane of the valve that forms the object of the present invention.

Figure 2 shows a cross section of the valve itself taken along the plane indicated in figure 1.

Figures 3, 4 and 5 are views that each show a different relative position of the fixed and movable plates of the valve.

Figures 6, 7 and 8 are a plan view from one side, an elevation view and a plan view from the other side respectively of the single sealing gasket which is fitted in the present invention.

### DESCRIPTION OF A PREFERRED EMBODIMENT

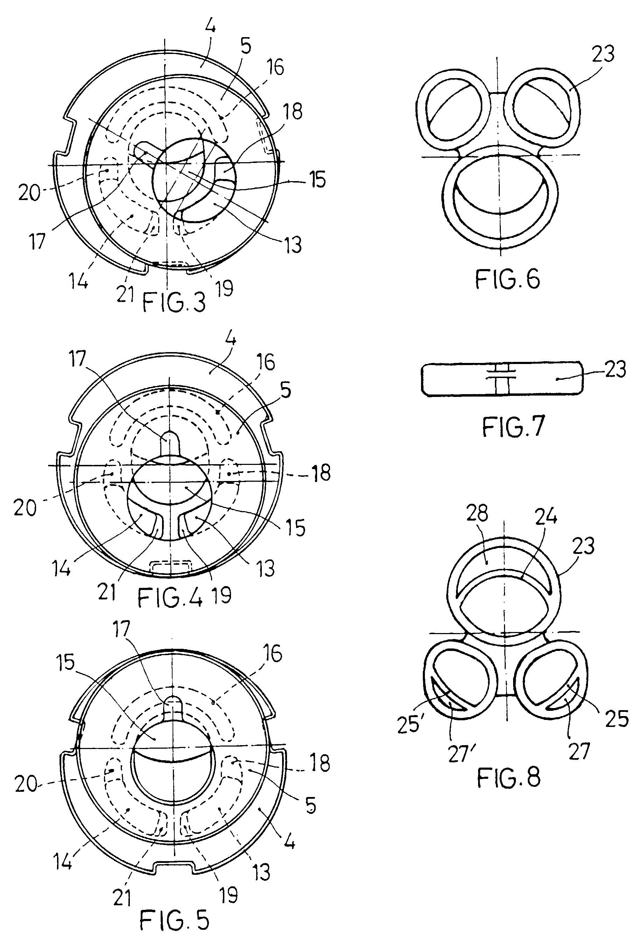

As can be seen in the drawings, the single control valve according to the present invention comprises an external casing 1, in the form of a cylindrical enclosure, the upper part of which is open for receiving the pivot support 11 on which the pivot 8 hinges by means of a transverse axis 9 and which is designed to actuate the movable adjusting plate 5, an adjustment ring 10 with upper stops 12 being provided above. Said casing 1 is open at the bottom where it has a projection 2 and receives the cover 3 under pressure, designed to support the fixed plate 4, said fixed plate having an approximately circular shape and a structure which can be seen in figures 3, 4 and 5. The moveable adjusting plate 5 fits over the fixed plate 4 and is actuated by the pulling element 7, a sealing gasket 6 being provided between them.

The rotation support 11 also limits the flow adjustment movement of the actuating pivot 8 and transmits the force for opening and closing to and from the extreme positions directly to the upper part of the casing 1.

When the pivot 8 is rotated by turning the tap control to the right, it increases the amount by which the hot water hole 13 of the fixed plate 4 is opened, and the opposite if is turned to the left, thereby increasing or reducing respectively the temperature of the water coming out of the outlet hole 15 of said fixed plate.

In order to achieve one of its objectives, the central opening of the movable plate 5 has a prolongation 17 that moistens a rebate 16 of the fixed plate 4, which has a curved shape, thereby keeping the upper region of the movable plate 5 wet.

The water inlets 13 and 14 of the fixed plate 4 are provided with elongation tapers 18, 19 and 20, 21 respectively on the friction surface in contact with the movable plate 5 in order to increase the adjustment range and make the flow of water easier.

The water inlet and outlet holes of the lower cover 3 are fitted with gaskets, which alternatively may take the form of a single gasket 23 provided with gasket elements that adapt to the inlet holes 13 and 14 together with another element that adapts to the water outlet hole 15 in the fixed plate 4. The openings of the gasket have the particular characteristic that each of the three holes is provided with a double gasket wall, such as 24, 25 and 25' which each define chambers 28, 27 and 27' that do not receive water but are filled only with air, thereby providing an effective shock-absorbing effect against the liquid flow vibrations, leading to a appreciable reduction in the noise level of the tap. Furthermore, they channel the liquid as it enters and leaves the valve, preventing turbulence due to transitions of section.

To further reduce the noise level, a sound-absorbing element 22 is provided inside the mixing cavity of the movable plate and is fixed to the support 7 that pulls said movable plate. Inlet holes 29 for the hot and cold water and an outlet hole 26 for the mixed water are provided in the body which houses the valve.

In an alternative embodiment of the sealing gaskets of the closing cover 3, said gaskets may consist of individual ring-shaped elements fitted to the corresponding openings to be made watertight, without forming a single body as in the version shown in figures 6, 7 and 8.

The rotation regulation ring which limits the maximum output temperature of the water is positioned on the external casing to which it is fixed, thereby making its operation easier to understand when used.

## Claims

1. A single control mixing valve, of the type which comprises inside a casing (1,2,3) two flat ceramic plates (4,5), adapted onto each other, where one (4) of said plates is fixed and provided with inlet openings (13,14) for hot and cold water and an outlet opening (15) for mixed water leading to a tap, the other plate (5) being movable and provided with a single opening in the form of an adjustment cavity to provide variable communication between said hot and cold water inlets (13,14) as well as for varying the free flow area of the outlet opening (15),
characterized in that the fixed plate (4) is provided with a curved rebate (16), concentric with the water outlet opening (15), to which water is fed via a channel-type prolongation (17) of the adjustment cavity of the movable plate (5), such that the region of contact between the two plates (4,5), opposite the water inlet side, remains constantly wet.

2. A single-control mixing valve according to claim 1, characterized in that gaskets fitted to the lower cover (3) of the casing in order to make the water inlet openings (13, 14) and the mixed water outlet opening (15) watertight, are provided in some part of its design with a double wall (24, 25, 25') defining chambers (28, 27, 27'), to which the water has no access, for absorbing the vibrations of the liquid flow and at the same time for channelling said liquid and thereby preventing turbulence at the inlet and outlet of the valve.

3. A single-control mixing valve according to claim 2, characterized in that the gaskets of the hot and cold water inlet openings (13, 14) and mixed water outlet opening (15) of the lower cover (3) constitute a individual piece made of elastomeric ring-shaped elements, each provided in some part of their design with a double wall defining chambers for absorbing the vibrations and channelling the flow of liquid in order to reduce turbulence.

## Patentansprüche

1. Ein Einhebelmischventil des Typs, der innerhalb eines Gehäuses (1, 2, 3) zwei flache Keramikplatten (4, 5) umfaßt, die aufeinander angepaßt sind, wobei eine (4) der Platten fixiert ist und mit Einlaßöffnungen (13, 14) für heißes und kaltes Wasser und einer zu einem Hahn führenden Auslaßöffnung (15) für gemischtes Wasser versehen ist, und die andere Platte (5) beweglich ist und mit einer einzelnen Öffnung in der Form einer Justierkammer versehen ist, um ein variables Kommunizieren zwischen den Heiß- und Kaltwassereinläßen (13, 14) zur Verfügung zu stellen sowie zum Variieren der freien Strömungsfläche der Auslaßöffnung (15), **dadurch gekennzeichnet,** daß die fixierte Platte (4) mit einer gekrümmten, zur Wasserauslaßöffnung (15) konzentrischen Kerbe (16) versehen ist, welcher Wasser über eine kanalartige Verlängerung (17) der Justierkammer der beweglichen Platte (5) zugeführt wird, so daß der Kontaktbereich zwischen den zwei Platten (4, 5), gegenüber der Wassereinlaßseite, ständig naß bleibt.

2. Ein Einhebelmischventil gemäß Anspruch 1, **dadurch gekennzeichnet,** daß Dichtungen, die an dem unteren Deckel (3) des Gehäuses angebracht sind, um die Wassereinlaßöffnungen (13, 14) und die Mischwasserauslaßöffnung (15) wasserdicht zu machen, in einem Teil ihrer Gestalt mit einer Doppelwand (24, 25, 25') versehen sind, welche Kammern (28, 27, 27') definiert, zu denen das Wasser keinen Zugang hat, um die Schwingungen der Flüssigkeitsströmung zu absorbieren und um gleichzeitig diese Flüssigkeit zu kanalisieren und dadurch Turbulenzen an dem Einlaß und Auslaß des Ventils zu verhindern.

3. Ein Einhebelmischventil gemäß Anspruch 2, **dadurch gekennzeichnet,** daß die Dichtungen der Heiß- und Kaltwassereinlaßöffnungen (13, 14) und Mischwasserauslaßöffnung (15) des unteren Deckels (3) ein selbständiges Teil bildet, das aus ringförmigen Elastomerelementen besteht, von denen jedes in Teilen seiner Gestalt mit einer Kammern definierenden Doppelwand versehen ist, um die Schwingungen zu absorbieren und die Flüssigkeitsströmung zu kanalisieren, um Turbulenzen zu reduzieren.

## Revendications

1. Vanne de mélange à commande unique du type qui comprend à l'intérieur d'un logement (1,2,3) deux plaques plates en céramique (4,5) adaptées l'une sur l'autre, l'une (4) de ces plaques est fixe et munie d'ouvertures d'admission (13,14) pour l'eau chaude et l'eau froide et une ouverture de sortie (15) pour l'eau mitigée menant à un robinet, l'autre plaque (5) est mobile et munie d'une ouverture unique sous forme d'une cavité de réglage pour assurer une communication variable entre les entrées d'eau froide et d'eau chaude (13, 14) ainsi que pour faire varier la surface d'écoulement libre de l'ouverture de sortie (15),
caractérisée en ce que la plaque fixe (4) est munie d'un rainurage courbe (16) concentrique à l'ouverture de sortie d'eau (15), sur lequel est amenée l'eau par l'intermédiaire d'un prolongement (17) de type canal de la cavité de réglage de la plaque mobile (5) de telle sorte que la zone de contact entre les deux plaques (4, 5) en face du côté d'admission d'eau demeure constamment mouillée.

2. Vanne de mélange à commande unique selon la revendication 1, caractérisée en ce que les joints montés sur le couvercle inférieur (3) du logement, joints qui assurent l'étanchéité à l'eau des ouvertures (13, 14) et de l'ouverture de sortie d'eau mélangée (15) sont munis dans une partie de leur construction d'une double paroi (24, 25, 25') définissant des chambres (28, 27, 27') sur lesquelles l'eau n'a pas accès, pour absorber les vibrations de l'écoulement liquide et en même temps pour canaliser le liquide et empêcher ainsi la turbulence au niveau de l'entrée et de la sortie de la vanne.

3. Vanne de mélange à commande unique selon la revendication 2, caractérisée en ce que les joints d'étanchéité des ouvertures d'admission d'eau froide et d'eau chaude (13, 14) et l'ouverture de sortie d'eau mélangée (15) du couvercle inférieur (3) constituent une pièce individuelle, réalisée à partir d'éléments annulaires élastomères, chaque élément étant muni dans une partie de sa construction d'une double paroi définissant des chambres pour absorber les vibrations et canaliser le flux de liquide pour en réduire la turbulence.
